(19) Europäisches Patentamt
European Patent Office
Office européen des brevets

(11) **EP 1 608 195 B1**

(12) **EUROPEAN PATENT SPECIFICATION**

(45) Date of publication and mention
of the grant of the patent:
**23.04.2008 Bulletin 2008/17**

(51) Int Cl.:
**H04Q 7/38** (2006.01)  **H04L 12/28** (2006.01)

(21) Application number: **04014356.2**

(22) Date of filing: **18.06.2004**

(54) **Cyclic transmission of notification coordinates in a communication system**

Zyklische Übertragung von Benachrichtigungskoordinaten in einem Kommunikationssystem

Transmission cyclique de coordonnées de notification dans un système de communication

(84) Designated Contracting States:
**AT BE BG CH CY CZ DE DK EE ES FI FR GB GR HU IE IT LI LU MC NL PL PT RO SE SI SK TR**

(43) Date of publication of application:
**21.12.2005 Bulletin 2005/51**

(73) Proprietor: **MATSUSHITA ELECTRIC INDUSTRIAL CO., LTD**
**Kadoma-shi, Osaka 571-8501 (JP)**

(72) Inventors:
• **Charpentier, Frédéric**
**10115 Berlin (DE)**
• **Löhr, Joachim**
**64287 Darmstadt (DE)**
• **Petrovic, Dragan**
**64295 Darmstadt (DE)**

(74) Representative: **Grünecker, Kinkeldey, Stockmair & Schwanhäusser Anwaltssozietät Maximilianstrasse 58 80538 München (DE)**

(56) References cited:
• "3GPP TS 25.402 v5.3.0 Technical Specification Group Radio Access Network; Synchronisation in UTRAN Stage 2" [Online] December 2003 (2003-12), , XP002307035 Retrieved from the Internet: URL:http://www.3gpp.org/ftp/Specs/html-inf o/25402.htm> * the whole document *

• "3GPP ts 25.304 v5.4.0 Technical Specification Group Radio Access Network; User Equipment (UE) procedures in idle mode and procedures for cell reselection in connected mode" June 2003 (2003-06), , XP002307036 Retrieved from the Internet: URL:http://www.3gpp.org/ftp/Specs/ html-inf o/25304.htm> * the whole document *
• "3GPP ts 25.211 v5.5.0 Physical channels and mapping of transport channels onto physical channels (FDD)" September 2003 (2003-09), , XP002307037 Retrieved from the Internet: URL: http://www.3gpp.org/ftp/Specs/html-inf o/ 25211.htm> * the whole document *
• "3GPP ts 23.246 v6.2.0 Multimedia Broadcast/ Multicast Service (MBMS); Architecture and functional description" March 2004 (2004-03), , XP002307038 Retrieved from the Internet: URL: http://www.3gpp.org/ftp/Specs/html-inf o/ 23246.htm> * the whole document *
• "3GPP TS 25.346 Introduction of the Multimedia Broadcast Multicast Service (MBMS) in the Radio Access Network (RAN);" March 2004 (2004-03), , XP002307039 Retrieved from the Internet: URL: http://www.3gpp.org/ftp/Specs/html-inf o/ 25346.htm> * the whole document *
• "3GPP TSG RAN WG1 meeting #37 R1-040520" May 2004 (2004-05), , XP002307040 Retrieved from the Internet: URL:http://www. 3gpp.org/ftp/tsg_ran/WG1_RL 1/TSGR1_37/Docs/Zips/R1-040520.zip> * the whole document *
• "3GPP TSG RAN WG1 meeting #37 R1-040536" May 2004 (2004-05), , XP002307041 Retrieved from the Internet: URL:http://www. 3gpp.org/ftp/tsg_ran/WG1_RL 1/TSGR1_37/Docs/Zips/R1-040536.zip> * the whole document *

**Description**

This invention is related to communication systems requiring the notification of a special event to one or many receivers. In particular, this invention relates to a notification procedure based on multiple frames.

In networks without dedicated connection to each single device, notification of devices about events like incoming calls, arriving data or requests for certain services is necessary when devices assume an idle state with a part of their functions disabled. Network devices monitor the data stream on the network at pre-determined instances of time to look for notifications which tell them that any incident on the network requires their attention.

One popular example of such networks are wireless networks, and in particular cellular networks. As a special examples of a cellular network, UMTS will be explained in more detail herein below.

The paging procedure is one of the most fundamental procedures in a communication system (see Harri Holma and Antti Toskala, "WCDMA for UMTS, radio access for third generation mobile communications, second edition", John Wiley & Sons, Ltd. , for an overview). It is a procedure defined between the mobile terminal (in UMTS called UE) and the radio access network that is used to inform the UE about the occurrence of a special event and triggers an associated behaviour with the UE. Main purpose of the paging procedure is to inform a specific UE about an incoming call (speech or data), but it can also be used to indicate changes in the network configuration and to request all UEs in the cell to read the broadcast control channel (BCCH) where this information is transmitted.

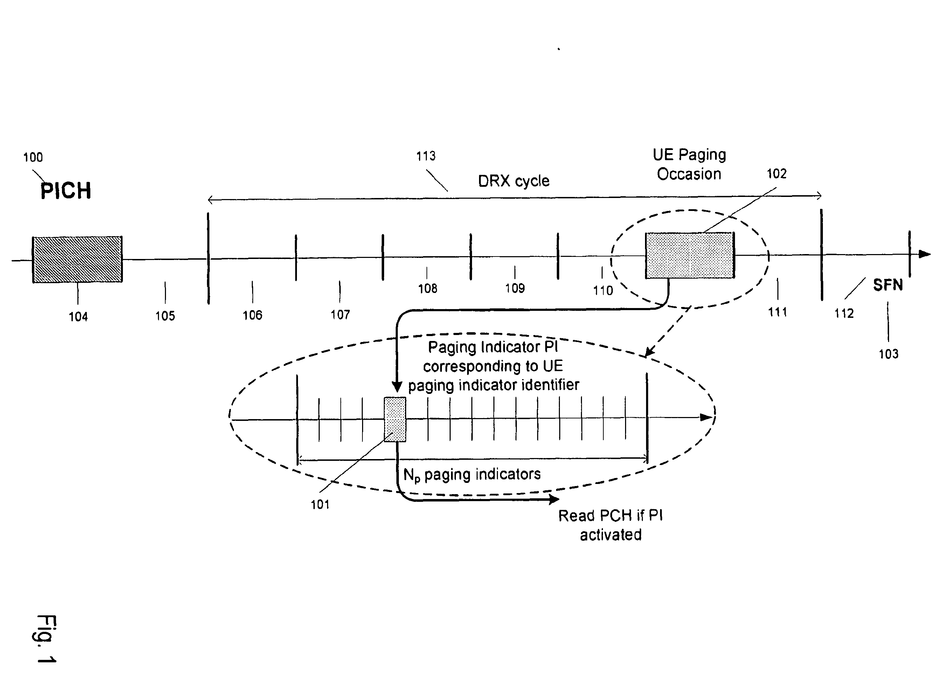

The most typical example for this procedure is the paging of an idle mode UE in order to set up a call initiated by a third party. The paging procedure is illustrated in figure 1. An idle mode UE is switched on and registered to the network but has no permanent connection to it. Once registered in the network, each UE is allocated to a paging group, which is characterised by its paging indicator PI 101. In idle mode, the UEs periodically monitor the PICH 100, where the status (active/non active) of the different paging indicators is signalled. When a specific paging indicator is activated, it triggers all UEs in the cell which belong to the corresponding paging group to read the Paging Channel (PCH), check the validity of the paging message received on the PICH and if the page was intended for the complete paging group (general paging) or for the particular UE.

In more detail, each paging group is uniquely defined by two parameters. The first parameter is the paging occasion 102, which specifies the time instants when the UEs belonging to a specific paging group should read the PICH. The second is the paging indicator identifier, which identifies the indicator 101 associated with the paging group of interest within the paging occasion frame 102.

The positions of the paging occasions are defined in 3GPP TS 25.304v5.4.0 "User Equipment (UE) procedures in idle mode and procedures for cell reselection in connected mode" as follows:

$$Paging\ Occasions = IMSI \bmod DRX\ cycle\ length + n * DRX\ cycle\ length, \quad (1)$$

where IMSI is the globally unique UE identification number and n is a positive integer. Equation 1 indicates for each UE the system frame numbers of its paging occasions. The system frame numbering (SFN) 103 is a cyclic running time counter used to identify the transmitted frames over time. The SFN can assume values between 0 and 4095. Each frame 102, 104-112 has a length of 10ms. A definition of SFN can be found in 3GPP TS 25.402v5.3.0 "Synchronisation in UTRAN Stage 2". Moreover, the time is divided, for paging purposes, into DRX cycles 113 (Discontinuous Reception), which regroup a fixed number of frames (DRX cycle length), here 102 and 106 to 111. In 3GPP, a DRX cycle 113 is a network configured parameter and may vary between 8 frames (0.08s) and 512 frames (5.12s). Once per DRX cycle 113, each UE wakes up at the frame 102 corresponding to its paging occasion and monitors the paging indicator of interest 101 that is transmitted over the PICH 100.

The paging indicator identifier related to a specific paging group depends also on the UE identifier IMSI as follows (from 3GPP TS 25.304v5.4.0, cited above):

$$PI\_identifier = (IMSI \operatorname{div} 8192) \bmod N_p, \quad (2)$$

where $N_p$ = (18, 36, 72, 144) is the number of paging indicators per PICH frame as defined in 3GPP TS 25.211v5.5.0 "Physical channels and mapping of transport channels onto physical channels".

If the paging indicator PI 101 corresponding to the paging indicator identifier of the UE paging group is activated during one of the paging occasion frames of the UE paging group, the UE reads the PCH (paging channel).

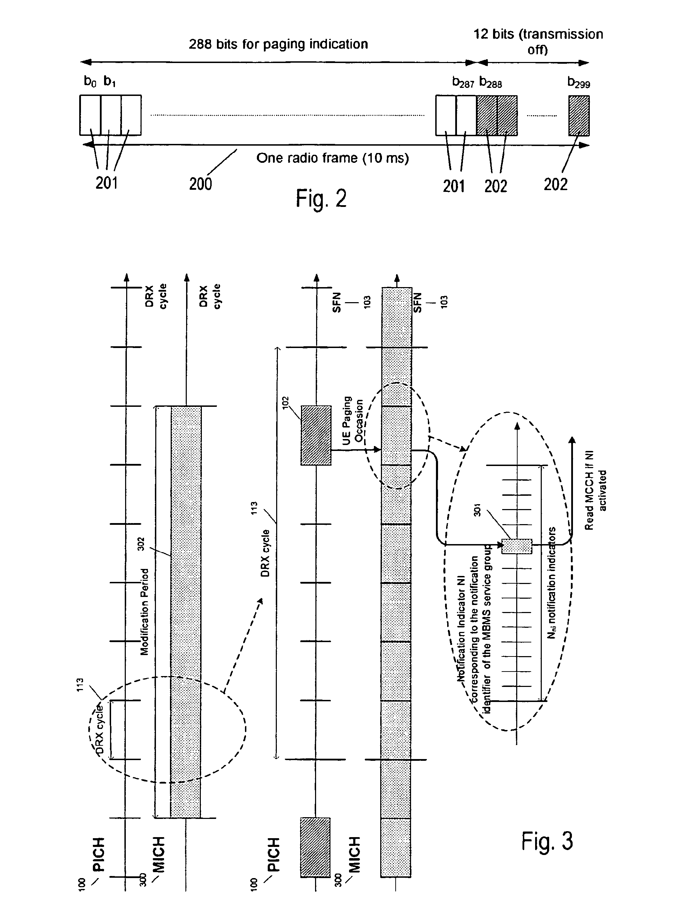

The physical channel PICH structure is specified in 3GPP TS 25.211v5.5.0. One frame 200 has a length of 10 ms and is subdivided in 300 bits 201, 202 as shown in Figure 2. The last 12 bits 202 are unused and reserved for further usage. The first 288 bits 201 are subdivided in $N_p$ paging indicators where $N_p$ is configured by the network. The paging indicators PI are further mapped on paging locations q depending on the SFN in order to combat time-localised interference as shown in the following equation.

$$q = \left( PI + \left\lfloor ((18 \times (SFN + \lfloor SFN/8 \rfloor + \lfloor SFN/64 \rfloor + \lfloor SFN/512 \rfloor)) \bmod 144) \times \frac{Np}{144} \right\rfloor \right) \bmod Np \qquad (3)$$

Depending on Np, each PI has a length L varying between 2 consecutive bits ($N_p$=144) and 16 consecutive bits (Np=18). When a PI is activated, all corresponding L bits are set to 1. They are set to 0 otherwise.

The performance of the paging procedure is measured by two metrics: the probability of missed event $P_m$ and the probability of false alarm $P_f$. A missed event occurs when the UE fails to detect a paging message because of decoding errors due to an unreliable interface between the transmitter and the receiver. A false alarm occurs when the paging decision derived by the UE is positive although this UE was not actually paged. This generally happens since several UEs share the same paging group. A false alarm can be caused by an unreliable interface.

The performance of the paging procedure is strongly influenced by 3 factors: the PICH transmission power, the number of paging indicators per frame Np and the DRX cycle length. The first two factors have a particularly strong influence on the probability of missed event $P_m$ (the probability of missing a page), whereas the last two impact mainly the probability of a false alarm $P_f$ (the probability of decoding an active page although no dedicated page has been sent). At a fixed PICH transmission power, the probability $P_m$ is much higher when $N_p$ is set to an high value (e.g. 144) than with a lower $N_p$ value (e.g 18). The exact value depends, of course, on the UE receiver performance. This aspect will not be further discussed, but it can be kept in mind that a low $N_p$ value implies a lower $P_m$. Unfortunately, this parameter has an opposite effect on the probability of false alarm, and a trade-off is necessary between $P_f$ and $P_m$. Indeed, assuming a perfect reception, the probability of false alarm is depending on the inverse of the total number of the paging groups, which is given by the following formula:

$$\text{Total number of paging groups} = N_p * DRX\ cycle\ length \qquad (4)$$

Some typical values for the probability of false alarm can be found in the right column of Table 1 further below.

With UMTS, a new aspect has been brought into the field of paging with the introduction of Multimedia Broadcast Multicast Service (MBMS).

In MBMS, a service (video clip, data download, etc.) is broadcast over a predefined service area and is received simultaneously by one or many mobiles that have previously subscribed to this service. An overview of the architecture and functional aspects of MBMS can is given in 3GPP TS 23.246v6.2.0 "Architecture and functional description", and the radio aspects of MBMS are currently standardised in 3GPP TS 25.346v6.0.0 "Introduction of the Multimedia Broadcast Multicast Service (MBMS) in the Radio Access Network (RAN) stage 2". The main purpose of MBMS is to allow transmission of the same information to several mobiles at the same time (point to multipoint transmission PtM). Therefore the network does not need to set up dedicated links to each of the interested mobiles in order to transmit this data. Three new channels are currently standardised by 3GPP in order to introduce MBMS services into the UMTS system. The MTCH (MBMS Traffic Channel) is foreseen for carrying the MBMS data content itself to several UEs within one cell during a PtM transmission. If only a few UEs are interested in the broadcast service, the network may rely on normal DPCH channels after establishment of separate dedicated radio links (Point-to-point transmission PtP). Finally, two control channels are introduced. The MCCH (MBMS Control Channel) is broadcasting the current MBMS configuration, signals MBMS specific parameters or messages. The MICH (MBMS indicator channel) is used for UE notification purpose.

One of the necessary functionalities to support MBMS is the MBMS notification procedure, with which the network informs the UEs interested in a specific service on the imminence of the transmission and signals the necessary configuration parameters. The main design criteria for this functionality are UE battery consumption, the robustness of the signalling against all kinds of perturbation and a low probability of false alarm. Unfortunately, these design targets might contradict each other, and typically a trade-off is needed between UE battery consumption and the probability of false alarm. For instance, UEs which have joined one or more MBMS services need to run a background process which periodically monitors the MICH. Frequent MICH readings might decrease the probability of false alarm, improve the signalling robustness and decrease the notification delay time, but would severely impact the UE power consumption.

For MBMS, the current working assumption, as presented in 3GPP TS 25.346v6.0.0, cited above, is to reuse the paging procedure as much as possible. Each MBMS service is mapped onto an MBMS service group depending on its MBMS service identifier like an UE is mapped onto a paging group depending on its UE identifier (ISIM). An MBMS service group is characterised by its notification identifier, which is mirroring the paging indicator identifier concept. The mapping function between the MBMS service identifier and the notification identifiers of the corresponding MBMS service group has not been specified and no concrete proposal has been made up to now, but a mapping function similar to the one presented in Equation 2 will be certainly used if finally specified. The number of different MBMS service identifiers currently envisaged is $2^{24}$, whereas the number of different MBMS service groups depends on the notification procedure that will be standardised. It is, however, not certain that an MBMS service group concept will be standardised as some proposals presented in 3GPP in R1-040536 "False Alarm on MICH", 3GPP TSG RAN1 Meeting #37 (Qualcomm) do not require this concept.

Furthermore, a new MBMS indicator channel (MICH) 300 as shown in figure 3 is introduced and reuses the same frame structure as the PICH 100 in figure 2. It contains $N_{ni}$ MBMS notification indicators NI per frame, and its value may be different to the number of paging indicators $N_p$ carried per frame by the PICH. Each notification identifier of each MBMS service group is associated with a notification indicator NI 301 within the MICH frame. Depending on $N_{ni}$, each NI is constituted L bits, where L varies between 2 bits ($N_p$=144) and 16 bits (Np=18). When a NI is activated, all corresponding L bits are set to 1. They are set to 0 otherwise. The MICH frames are further regrouped into Modification Periods 302, which should have a length at least as long as the longest DRX cycle considered in the cell. The notified MBMS service groups are the same over a modification period, and the MBMS UEs monitoring the notified MBMS service groups shall read the information broadcast over the MCCH at the next modification period.

The main difference with respect to the paging procedure is that there is no paging occasion concept in MBMS, since an MBMS service notification is signalled over all the frames forming a modification period. This is performed in order to reach all idle mode UEs in the cell. It is currently not specified when an idle mode UE should read the MICH but one possible solution would be to check the MICH at the paging occasion 102 defined by the paging procedure, as the UE has to monitor the PICH in any case for normal paging procedure as shown in figure 3. This would lead to power saving, as paging and MBMS notification would require only one receiver activation per DRX cycle.

Because of the absence of the time multiplexing between MBMS service groups realized by the paging occasions in the case of the standard paging procedure, the total number of MBMS service groups is significantly lower than the number of paging groups. The total number of MBMS service groups is straightforward to derive and equals to $N_{ni}$. As for the paging procedure, the MBMS service group size influences the probability of false alarm $P_f$ and the probability $P_m$ of missing a notification. In order to guarantee a low $P_m$, $N_{ni}$ should be set to a low value. This would however have a negative impact on $P_f$. Thus, since the loss of the time separation cannot be compensated by a higher number of notification indicators, the probability of false alarm for MBMS is significantly higher than for the paging procedure, as shown in column 2 of Table 1.

Table 1-Probabilities of false alarm $P_f$ for MBMS notification with K=2

| Np | Current working assumption | Indicator combination method K=2 | Indicator sequence method K=2 | Paging procedure false alarm DRX cycle length =1.28s 1 paged UE per paging occasion Uniform distribution of UE Id (IMSI) |
|---|---|---|---|---|
| 18 | 5,6% | 0,6% | 0,3% | 0,04% |
| 36 | 2,8% | 0,2% | 0,08% | 0,02% |

Two main proposals are currently considered within 3GPP in order to lower the probability of false alarm on the MICH. The first one has been proposed by Samsung in R1-040520 "Reducing the false alarm probability on MICH decoding", 3GPP TSG RAN1 Meeting #37 (Samsung), where a MBMS service group is identified by a particular combination of K notification indicator identifiers signalled by the corresponding notification indicators within one MICH frame. The second proposal from Qualcomm suggests mapping directly each MBMS service identifier onto a sequence of notification indicator identifiers signalled by the corresponding notification indicators over the successive frames composing a modification period (see 3GPP R1-040536 cited above). With this method, a single notification indicator identifier is signalled per frame. From this sequence, the UE reads K indicators in order to decide whether an MBMS service is notified.

Herein below, this first method will be called "indicator combination method" and the latter one will be called "indicator sequence method".

It is straightforward to notice that both proposals rely on a multi-component message to signal a notification (several notification indicators are used) and not on a single element message (one notification indicator) anymore. The main difference between the proposals is that the indicator combination method uses notification indicator identifiers of the same frame whereas the indicator sequence method considers notification indicators that are spread over several frames. Moreover it should be highlighted that with 3GPP R1-040536 (indicator sequence method), MBMS services are directly notified and the intermediate stage of mapping the MBMS service onto MBMS service group does not exist anymore.

The proposal of 3GPP R1-040520 to map each MBMS service group onto a bcombination of notification indicator identifiers within the same frame (indicator combination method) has the benefit of increasing the size of the MBMS service group and therefore decreasing the probability of false alarm.

The number of the MBMS service groups is given by the following formula:

$$MBMS_{gpsize} = \binom{N_{ni}}{K} = \frac{N_{ni}!}{(N_{ni} - K)!K!}, \qquad (5)$$

where K denotes the number of considered notification indicators for one MBMS service group within one frame.

With $N_{ni}$=18 and K=2, the number of the MBMS service groups is 153.

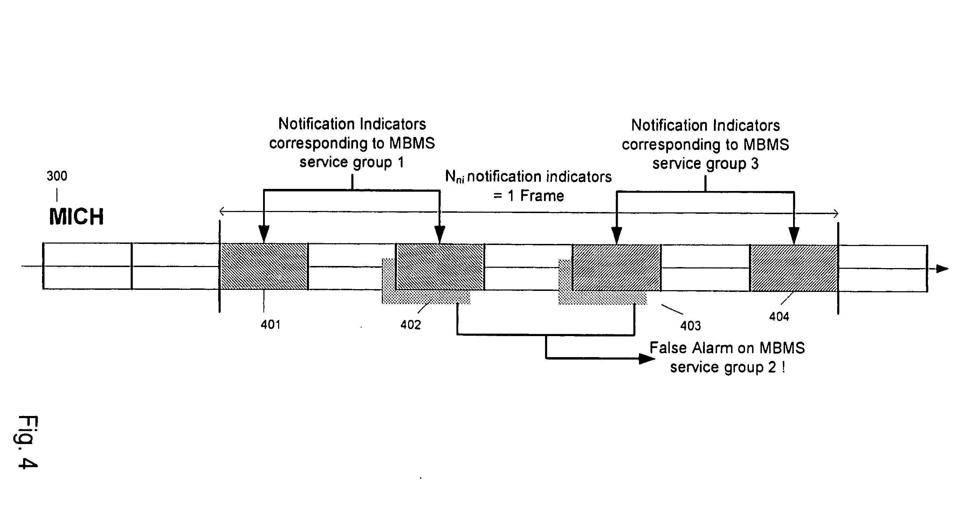

The main drawback of this proposal is that, if multiple MBMS notifications are performed simultaneously (within the same frame), it will cause an increase of the probability of false alarm as some overlapping effects are to be feared. This is shown in Figure 4, where the notifications indicators 401 and 402 are associated with the MBMS service group 1, the notification indicators 402 and 403 are associated with the MBMS service group 2 and the notifications indicators 403 and 404 are associated with the MBMS service group 3. In this case, the simultaneous notification of the MBMS service group 1 and 3 would trigger the UEs interested in the MBMS service group 2, which creates a false alarm for these UEs. Moreover, a simple and implementation feasible mapping between MBMS service group identifiers and notification indicator identifiers has not been proposed so far.

An example of the probability of false alarm Pf for the indicator combination method is given in the third column of Table 1 above.

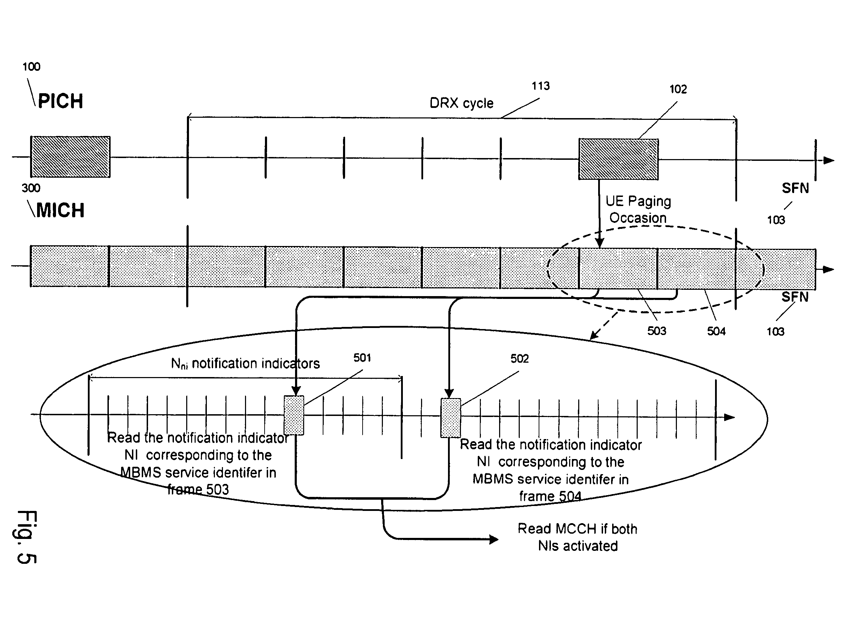

In 3GPP R1-040536, Qualcomm proposed to directly map each MBMS service identifier into a notification indicator identifier sequence transmitted over the modification period (indicator sequence method). From this sequence, K notification indicators are read by the UE. This is shown in figure 4. In the example shown in figure 5, K equals 2. Starting with the UE paging occasion 102, the UE reads two notification indicators 501, 502 within frames 503, 504 of MICH 300. If both notification indicators 502, 502 are positive, a notification of the corresponding MBMS service identifier is assumed to be present, and information is received from the MCCH about the cause of the notification.

With this method, the number of the MBMS service identifiers which can be distinguished depends on the number of notification indicators read by the UE. This is given by the following formula:

$$MBMS_{dist\_service} = N_{ni}{}^{K}, \qquad (6)$$

where K denotes the number of the read notification indicators of the notification sequence.

In a sense, the number of distinguishable MBMS services is similar to the number of MBMS service groups as they have the same influence on false alarm probability.

With $N_{ni}$ =18 and K=2, the number of the distinguishable MBMS services is 324, which is significantly higher than with the indicator combination method.

Moreover with this approach, the likelihood of overlaps between different notification messages is significantly lower compared with Samsung approach. This makes this solution more robust in case of multiple simultaneous notifications and therefore more appealing.

3GPP R1-040536 proposes to generate the notification indicator identifier sequence with the help of a pseudo-random generator using a shift register structure. A pseudo-random generator iteratively creates a pseudo-random sequence number based on the past of the sequence. Given the generator law, the sequence is fully deterministic and is defined by the initial value (generator seed) and its starting time, which is the beginning of the modification period. Unfortunately this method requires the UE to track down the evolution of the sequence by continuously running the same sequence generator. This latter point is particularly inappropriate, as the UE only needs to know the values of this sequence at the K SFNs where it actually reads the MICH.

An example of the probability of false alarm $P_f$ for the indicator sequence method is given in column 4 of Table 1 above.

As highlighted earlier, the MICH transmission power and the length of the notification indicators mainly drive the probability of missed event and this aspect will not be treated in the present invention. As shown in Table 1 above and Table 2 below, the use of a notification sequence appears to currently provide the best performance with respect to the probability of false alarm, but the notification sequence method proposed in 3GPP R1-040536 requires some background processing and therefore is not optimal with respect to the battery lifetime.

It is the object of the present invention to provide a notification mechanism based on a MICH structure that guarantees a low battery power consumption of the receiving device and low probabilities of missed notification and false alarm.

This object is achieved by a method according to claim 1, a device according to claim 6, a computer-readable medium according to claim 7, a device according to claim 8, a computer-readable medium according to claim 9 and a communication system according to claim 10.

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein

Figure 1 illustrates an example of a paging procedure as defined in 3GPP R99,

Figure 2 shows an exemplary structure of a paging indicator channel as defined in 3GPP R99,

Figure 3 shows an example for a notification procedure for a Multimedia Broadcast Multicast Service as specified by 3GPP

Figure 4 illustrates the occurrence of false alarm due to overlapping of notification indicators,

Figure 5 shows another example for a MBMS notification procedure according to an indicator sequence method,

Figure 6 illustrates the representation of notification sequences with length 3 as a 3-dimensional space,

Figure 7 depicts a representation of notification sequences with length 2 as a 2-dimensional space.

The present invention presents a new method for a multi-frame notification messaging based on cyclic transmission of notification coordinates. This method will be called herein below the "cyclic notification sequence method".

Although the method according to the present invention can be applied to various wired and wireless networks requiring notification and having a framed data structure, it will explained below without loss of generality for the example of MBMS notification in UMTS, like defined by the 3GPP. Other applications are conceivable with wired local area networks or wireless networks of other standards. For example, notifications could be used to wake up devices of a wired local area network.

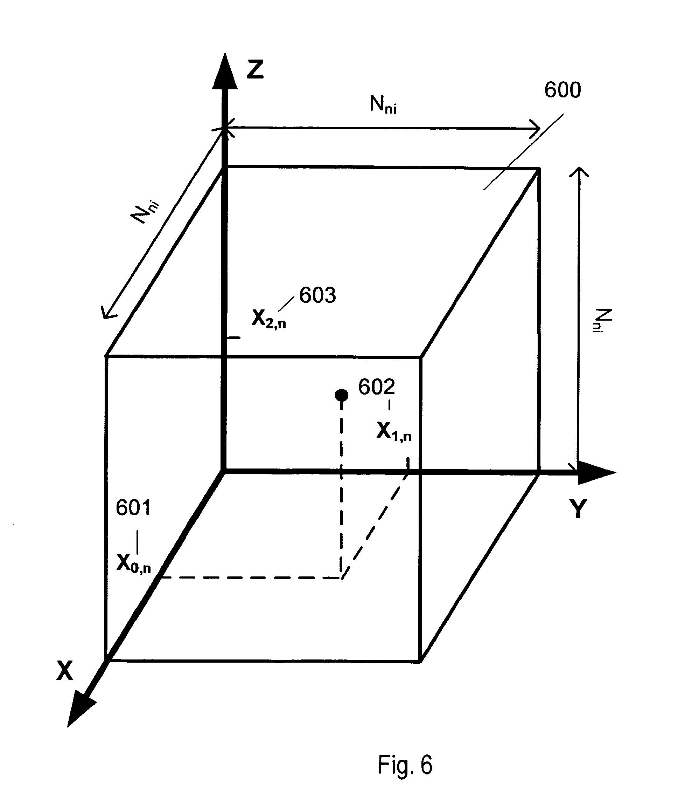

Referring now to figure 6, a space 600 is considered containing notification sequences of finite length K. In the example shown in figure 6, K has a value of 3. The following equation gives the number of possible notification sequences:

$$Nb_{notification\_sequence} = N_{ni}^{K}, \qquad (6)$$

Depending on the number of generated notification sequences, in 3GPP a notification sequence will be associated to a specific MBMS service group or may directly identify an MBMS service. This will depend on the sequence length and on the number of notification indicators per frame. For example, with $N_{ni}$=18 and K=6, the number of notification sequences will be greater than the number of MBMS service identifiers currently foreseen in 3GPP TS 29.846v1.3.1, which would make the introduction of MBMS service group unnecessary.

As illustrated in figure 6, the space 600, which represents a plurality of notification identifiers (for example MBMS service group identifiers or MBMS service identifiers), can be seen as a K-dimensional space, and each notification identifier can be identified by a set of K coordinates as follows

$$n = \sum_{i=0}^{K-1} X_{i,n} N_{ni}^{i}, \qquad (7)$$

where $X_{i,n} \in [0, N_{ni}-1]$ and n is the notification identifier of the $n^{th}$ notification sequence.

It is proposed to transmit the $i^{th}$ notification indicator identifier of the $n^{th}$ notification sequence with a notification indicator identified by the coordinate $X_{i,n}$ 601, 602, 603 within the frame identified by SFN based on the following rule

---

**If SFN mod K =i**

**Then activate the $X_{i,n}{}^{th}$ notification indicator on MICH**

**End**

---

The coordinates $X_{i,n}$ 601, 602, 603 can be easily computed by the network and the UE. One possibility for computing the $X_{i,n}$ coordinates is given by the following set of iterative equations.

$$X_{o,n} = n \bmod N_{ni}$$
$$\forall i \in [1, K-1], X_{i,n} = \left[ \left( n \bmod N_{ni}{}^{i+1} \right) - X_{i-1,n} \right] div\, N_{ni}, \tag{8}$$

where mod and div are the modulo and the integer division operations.

Another possibility is given by the following equation.

$$\forall i \in [0, K-1], X_{i,n} = (n \bmod N_{ni}{}^{i+1}) div\, N_{ni}{}^{i}. \tag{9}$$

It shall be noted that both solutions are equivalent.

The proposal presented above has the same probability of false alarm, assuming a perfect decoding of the indicators mapped on the MICH as the indicator sequence method proposal if the length of the notification sequence is the same as the number of indicators read by the UE (indicator sequence method). Analytical and simulation results are shown in table 2 and the simulation assumptions are presented in table 3.

Table 2- Probability of false alarm $P_f$ and mean time between 2 false alarms

| K | Indicator combination method | Mean time between 2 false alarms in s. | Indicator sequence & cyclic notification sequence methods K=2 | Mean time between 2 false alarms in s. |
|---|---|---|---|---|
| 1 | 25% | 0,04 | 25% | 0,04 |
| 2 | 19% | 0,05 | 6,2% | 0,16 |
| 3 | 20% | 0,05 | 1,5% | 0,65 |
| 4 | 24% | 0,04 | 0,4% | 2,50 |

Table 3- Simulation assumptions for the probability of false alarm simulations

| Parameter Name | Value |
|---|---|
| Number of tries | 100000 |
| Number of announced MBMS service | 50 |
| Distribution of MBMS service ID | Uniform |
| UE Receiver performance | Error free |

(continued)

| Parameter Name | Value |
|---|---|
| Number of indicator within 1 MICH frame (Np) | 3 6 |
| Number of MBMS services notified per frame | 5 |
| Number of MBMS services monitored by the UE | 1 |

As an example, a system is now regarded with $N_{ni}$=18 notification indicators per frame. With a sequence length of K=3, $18^3$=5832 notification identifiers can be distinguished. If a service has been assigned the notification identifier 3277, the cartesian coordinates, and therefore the identifiers of the notification indicators, of which the sequence consists, are

$X_{0,3277}$ = 3277 mod 18 = 1
$X_{1,3277}$ = ((3277-1) div 18) mod 18 = 182 mod 18 = 2
$X_{3,3277}$ = ((182-2) div 18) mod 18 = 10 mod 18 = 10.
In a frame with SFN 1713,
i=1713mod3=0,
therefore in the case of a notification the notification indicator indexed with $X_{0,3277}$ = 1 would be set to positive. In the next frame, the notification indicator indexed with $X_{1,3277}$ = 2 would be set to positive and in the following frame the notification indicator indexed with $X_{3,3277}$ = 10 would be set to positive. The same would be repeated in a cyclic manner ever frame until the end of the notification period.

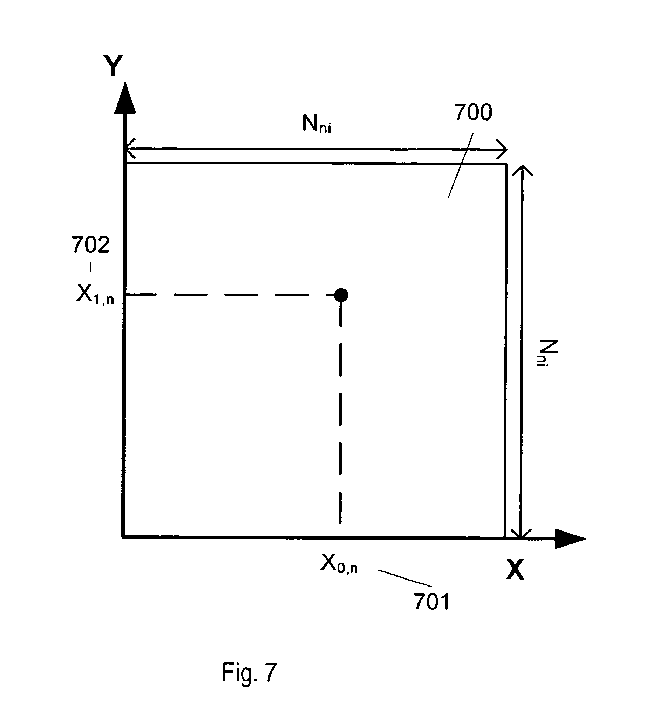

Referring now to figure 7, an example with K=2 is shown. The space 700 can be seen as a square of side $N_{ni}$ and $X_{0,n}$ 701 and $X_{1,n}$ 702 are the well known (x,y) coordinates.

The $n^{th}$ notification sequence is identified by

$$n = yN_p + x, \qquad (10)$$

and the coordinates are easily calculated as follows

$$\begin{cases} x = n \bmod N_{ni} \\ y = n \operatorname{div} N_{ni} \end{cases} . \qquad (11)$$

It should be highlighted that the presented way of calculating the K coordinates $X_{i,n}$ is not unique and several other ways are possible (e.g. starting with the highest coordinates as proposed in Equation (9). The precise choice of particular equations to calculate the K coordinates has no significant impact on the overall complexity or on the UE power consumption. This calculation is only performed once when the UE is signalled the MBMS service identifier it should monitor.

Depending on the number of notification sequences, the notification identifier is associated to an MBMS service group identifier or directly to an MBMS service identifier.

In other applications of the invention, the notification identifier might also be an identifier of the device itself.

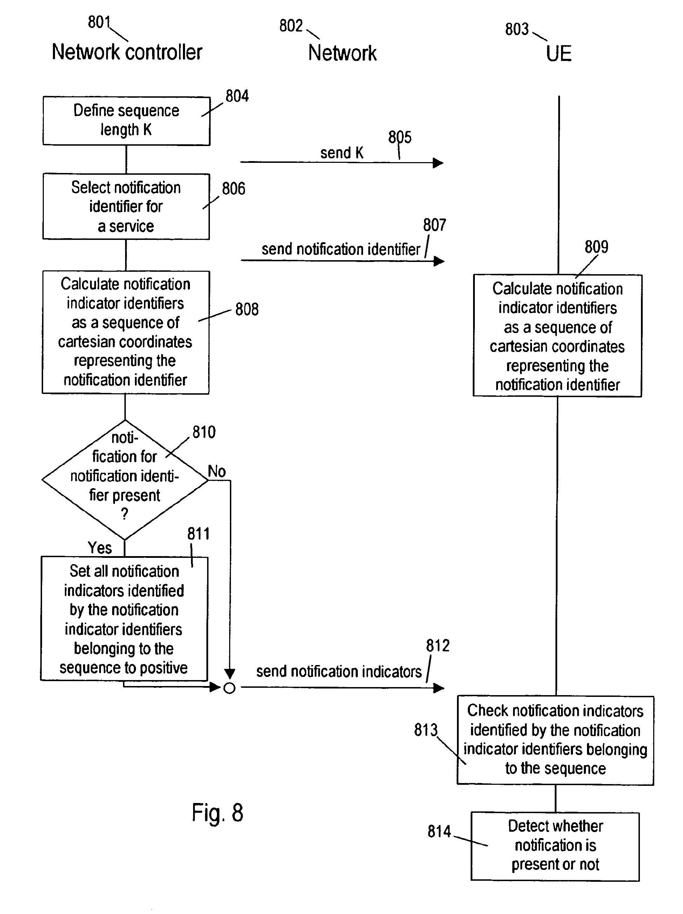

Referring now to figure 8, an exemplary flow chart is shown, employing the method according to the present invention. Three columns show the activities of a first network device 801 which might be a network controller, a second network device 803, which might be a UMTS UE and a network 802 connecting both. First, network controller 801 defines a sequence length K in step 804 and transmits it over network 802 to UE 803 in step 805. It is assumed that UE 803 has subscribed to a service which has been assigned a notification identifier, for example a service identifier or service group identifier in step 806. UE 803 is informed about this identifier in step 807. K can without problem be re-defined after the notification identifier has been assigned and transmitted. Therefore steps 804 and 805 can also be performed after steps 806 and 807. Now both devices can calculate the sequence of notification indicator identifiers like explained above in steps 808 and 809.

Note that only K and the notification identifier have to be informed to UE 803. If the UE is switched off and switched back on after a longer time, it usually only needs to receive information about K and can determine directly and without other synchronisation than a frame number the notification indicator identifier of the sequence belonging to the actual frame, using the frame number broadcast in the network and the equations above.

If a notification is present for the given notification identifier ("YES" in 810), for example because new data is available to be transmitted, the network controller subsequently sets the notification indicators, one of each frame, identified by the calculated notification indicator identifiers, to positive in step 811. For notification of other notification identifiers, other notification indicators or even the same may be set to positive within the same frame. As all notification indicators had been initialised to negative, this corresponds to a disjunction between all notifications. All notification indicators are broadcast over the network in step 812. They can be received by UE 803 within a suitable time interval. The notification indicators identified by the notification indicator identifier belonging to the sequence can then be checked for their contents and the presence of a respective notification can be detected. In this context, one frame is to be understood as the time unit within which one notification indicator of a sequence is transmitted. This could be a UMTS frame, but also any smaller or larger time unit like for instance a UMTS subframe.

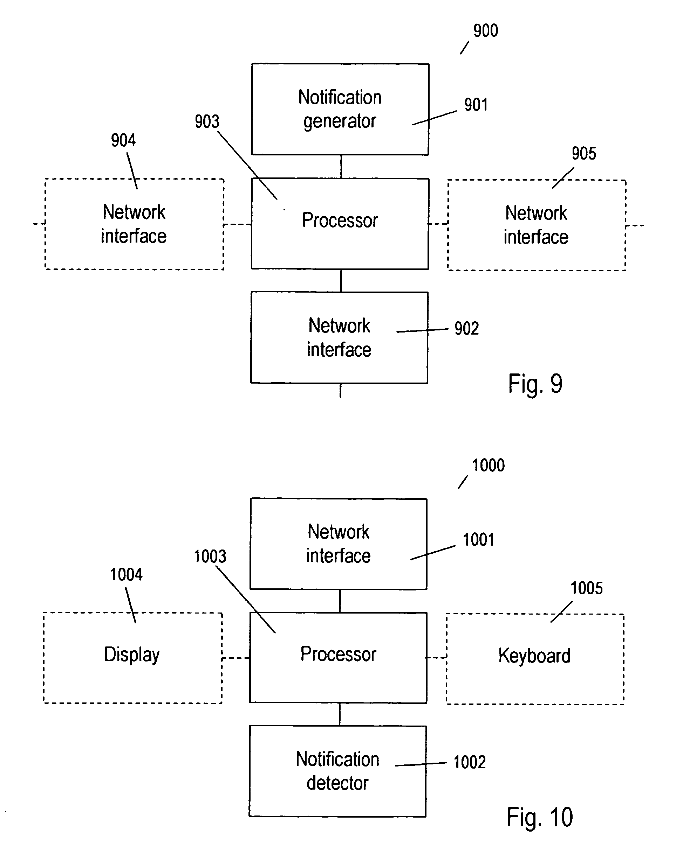

In figure 9 an exemplary structure of a device 900 of a communication system is shown, which can send notifications according to the method described above. Among other elements, like processor 903 and interfaces 904, 905 to other networks, it may comprise a notification generator 901 to generate the notification indicators as described above and a network interface 902 to send them, among other data, via a communication network. The notification generator 901 may advantageously be implemented in software to be carried out in a general purpose processor.

A device 1000 of a communication system, adapted to receive and detect notifications sent by device 900, is shown in figure 10. It comprises a network interface 1001 to receive notification indicators and other information from the network, and a notification detector 1002 to detect notifications from the received notification indicators. It may further comprise components like processor 1003, display 1004 and keyboard 1005, which are not required to carry out the present invention. Notification detector 1002 may be implemented in software to be carried out in a general purpose processor.

Another embodiment of the present invention relates to the implementation of the above described various embodiments using hardware and software. It is recognized that the various above mentioned methods as well as the various logical blocks, modules, circuits described above may be implemented or performed using computing devices, as for example general purpose processors, digital signal processors (DSP), application specific integrated circuits (ASIC), field programmable gate arrays (FPGA) or other programmable logic devices, etc. The various embodiments of the present invention may also be performed or embodied by a combination of these devices.

Further, the various embodiments of the present invention may also be implemented by means of software modules which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1.  Method for event notification in a wireless communication network, comprising the steps of
assigning a sequence of K notification indicator identifiers to a notification identifier;
setting all notification indicators identified by the notification indicator identifiers belonging to said sequence to positive if a notification for said notification identifier is present (811); and
sending said notification indicators via a notification channel of a wireless communication network (812),
wherein
notification indicators consist of at least one bit each and are successively transmitted on a channel having a framed structure;
said sequence comprises exactly one notification indicator identifier per frame; and
said sequence is repeated with a period of K frames,
**characterised in that**
said notification identifiers are arranged in a K-dimensional space, K being greater than one;
each notification identifier is associated with one set of K coordinates; and
said sequence of notification indicator identifiers consists of said K coordinates.

2.  The method according to claim 1, wherein in one frame $N_{ni}$ notification indicators are transmitted and said K coordinates $X_i$ assigned to said notification identifier n satisfy an equation

$$n = \sum_{i=0}^{K-1} X_{i,n} N_{ni}{}^{i}.$$

**3.** The method according to one of the preceding claims, wherein a transmission order of said notification indicator identifiers within said sequence is determined by a numbering of said frames.

**4.** The method according to claim 3, wherein an $i^{th}$ coordinate is an identifier of the assigned notification indicator in all frames with a frame number M satisfying an equation

$$i = M \bmod K .$$

**5.** The method according to one of the preceding claims, further comprising the steps of
defining the sequence length K prior to said step of assigning a sequence of K notification indicator identifiers to a notification identifier (804); and
sending the value K via a communication network (805).

**6.** A device (900) of a communication system, comprising a notification generator (901) and a network interface (902), **characterised in that**
said notification generator and said network interface are provided with means configured to perform the steps of a method according to one of the preceding claims.

**7.** A computer-readable medium having stored thereon instructions that, when executed on a processor of a device of a communication system, cause the device to perform the steps of one of the methods according to the claims 1 to 5.

**8.** A device (1000) of a wireless communication system, comprising a notification detector (1002) and a network interface (1001), configured to receive and detect notifications from a notification channel of a wireless communication system,
said network interface and said notification detector comprising means configured to receive and detect notifications consisting of indicators consisting of at least one bit each, being successively transmitted on a channel having a framed structure, and being identified by a sequence of K notification indicator identifiers assigned to a notification identifier,
said sequence comprising exactly one notification indicator identifier per frame and being repeated with a period of K frames, wherein
said means is further configured to judge that a notification for said notification identifier is present, if all indicators identified by said sequence of notification indicator identifiers are set to positive,
**characterised in that**
said means is further configured to identify said indicators, to be received, by a sequence of notification indicator identifiers consisting of K coordinates of a K-dimensional space, K being greater than one, in which said notification identifiers are arranged, each notification identifier being associated with one set of K coordinates.

**9.** A computer-readable medium having stored thereon instructions that, when executed on a processor of a device of a communication system, cause the device to receive and detect notifications from a paging indicator channel of a wireless communication network,
said notifications consisting of indicators consisting of at least one bit each, being successively transmitted on a channel having a framed structure, and being identified by a sequence of K notification indicator identifiers, said sequence comprising exactly one notification indicator identifier per frame and being repeated with a period of K frames, wherein
it is judged that a notification for said notification identifier is present, if all indicators identified by said sequence of notification indicator identifiers are set to positive,
**characterised in that**
said notification identifiers are arranged in a K-dimensional space, K being greater than one;
each notification identifier is associated with one set of K coordinates, and
said sequence of notification indicator identifiers consists of said K coordinates.

**10.** A communication system comprising at least one device according to claim 6, at least one device according to claim 8, and a network connecting said devices.

**Patentansprüche**

1. Verfahren zur Mitteilung von Ereignissen in einem Drahtlos-Kommunikationsnetzwerk, das die folgenden Schritte umfasst:

   Zuweisen einer Sequenz von K Mitteilungs-Indikatorkennungen zu einer Mitteilungs-Kennung;
   Setzen aller Mitteilungs-Indikatoren, die durch die Mitteilungs-Indikatorenkennungen identifiziert werden, die zu der Sequenz gehören, auf Positiv, wenn eine Mitteilung für die Mitteilungs-Kennung vorhanden ist (811); und
   Senden der Mitteilungs-Indikatoren über einen Mitteilungs-Kanal eines Drahtlos-Kommunikationsnetzwerks (812),
   wobei
   Mitteilungs-Indikatoren aus wenigstens einem Bit bestehen und nacheinander auf einem Kanal mit einer Rahmen-Struktur gesendet werden;
   die Sequenz genau eine Mitteilungs-Indikatorkennung pro Rahmen umfasst; und
   die Sequenz mit einer Periode von K Rahmen wiederholt wird,
   **dadurch gekennzeichnet, dass**
   die Mitteilungs-Kennungen in einem K-dimensionalen Raum angeordnet werden, wobei K größer ist als eins;
   jede Mitteilungs-Kennung mit einem Satz von K Koordinaten verknüpft ist; und
   die Sequenz von Mitteilungs-Indikatorkennungen aus den K Koordinaten besteht.

2. Verfahren nach Anspruch 1, wobei in einem Rahmen $N_{ni}$ Mitteilungs-Indikatoren gesendet werden und die K Koordinaten $X_i$, die der Mitteilungs-Kennung n zugewiesen werden, eine Gleichung

$$n = \sum_{i=0}^{K-1} X_{i,n} N_{ni}{}^{i}$$

erfüllen.

3. Verfahren nach einem der vorangehenden Ansprüche, wobei eine Sendereihenfolge der Mitteilungs-Indikatorkennungen in der Sequenz durch eine Nummerierung der Rahmen bestimmt wird.

4. Verfahren nach Anspruch 3, wobei eine i-te Koordinate eine Kennung des zugewiesenen Mitteilungs-Indikators in allen Rahmen ist und eine Rahmennummer M eine Gleichung

$$i = M \bmod K$$

erfüllt.

5. Verfahren nach einem der vorangehenden Ansprüche, das des Weiteren die folgenden Schritte umfasst:

   Definieren der Sequenz-Länge K vor dem Schritt des Zuweisens einer Sequenz von K Mitteilungs-Indikatorkennungen zu einer Mitteilungs-Kennung (804); und
   Senden des Wertes K über ein Kommunikationsnetz (805).

6. Vorrichtung (900) eines Kommunikationssystems, die eine Mitteilungs-Erzeugungseinrichtung (901) und eine Netzwerkschnittstelle (902) umfasst,
   **dadurch gekennzeichnet, dass**
   die Mitteilungs-Erzeugungseinrichtung und die Netzwerkschnittstelle mit Einrichtungen versehen sind, die zum Durchführen der Schritte eines Verfahrens nach einem der vorangehenden Ansprüche konfiguriert sind.

7. Computerlesbares Medium, auf dem Befehle gespeichert sind, die, wenn sie auf einem Prozessor einer Vorrichtung eines Kommunikationssystems ausgeführt werden, die Vorrichtung veranlassen, die Schritte eines der Verfahren nach den Ansprüchen 1 bis 5 durchzuführen.

8. Vorrichtung (1000) eines Drahtlos-Kommunikationssystems, die eine Mitteilungs-Erfassungseinrichtung (1002) und eine Netzwerkschnittstelle (1001) umfasst, die so konfiguriert sind, dass sie Mitteilungen von einem Mitteilungskanal eines Drahtlos-Kommunikationssystems empfangen und erfassen, wobei die Netzwerkschnittstelle und die Mitteilungs-Erfassungseinrichtung eine Einrichtung umfasst, die so konfiguriert ist, dass sie Mitteilungen empfängt und erfasst, die aus Indikatoren bestehen, die jeweils aus wenigstens einem Bit bestehen und die nacheinander auf einem Kanal mit einer Rahmen-Struktur gesendet werden und durch eine Sequenz von K Mitteilungs-Indikatorkennungen modifiziert werden, die einer Mitteilungs-Kennung zugewiesen wird, die Sequenz genau eine Mitteilungs-Indikatorkennung pro Rahmen umfasst und mit einer Periode von K Rahmen wiederholt wird, wobei die Einrichtung des Weiteren so konfiguriert ist, dass sie feststellt, dass eine Mitteilung für die Mitteilungs-Kennung vorhanden ist, wenn alle durch die Sequenz von Mitteilungs-Indikatorkennungen identifizierten Indikatoren auf Positiv gesetzt sind, **dadurch gekennzeichnet, dass** die Einrichtung des Weiteren so konfiguriert ist, dass sie die zu empfangenden Indikatoren mit einer Sequenz von Mitteilungs-Indikatorkennungen identifiziert, die aus K Koordinaten eines K-dimensionalen Raums bestehen, in dem die Mitteilungs-Kennungen angeordnet sind, wobei K größer ist als eins, und jede Mitteilungs-Kennung mit einem Satz von K Koordinaten verknüpft ist.

9. Computerlesbares Medium, auf dem Befehle gespeichert sind, die, wenn sie auf einem Prozessor einer Vorrichtung eines Kommunikationssystems ausgeführt werden, die Vorrichtung veranlassen, Mitteilungen von einem Paging-Indikatorkanal eines Drahtlos-Kommunikationsnetzwerkes zu empfangen und zu erfassen, wobei die Mitteilungen aus Indikatoren bestehen, die aus wenigstens einem Bit bestehen, und jeweils nacheinander auf einem Kanal mit einer Rahmenstruktur gesendet werden und durch eine Sequenz von K Mitteilungs-Indikatorkennungen identifiziert werden, wobei die Sequenz genau eine Mitteilungs-Indikatorkennung pro Rahmen umfasst und mit einer Periode von K Rahmen wiederholt wird, wobei festgestellt wird, dass eine Mitteilung für die Mitteilungs-Kennung vorhanden ist, wenn alle durch die Sequenz von Mitteilungs-Indikatorkennungen identifizierten Identifikatoren auf Positiv gesetzt sind, **dadurch gekennzeichnet, dass** die Mitteilungs-Kennungen in einem K-dimensionalen Raum angeordnet sind, wobei K größer ist als eins; jede Mitteilungs-Kennung mit einem Satz von K Koordinaten verknüpft ist, und die Sequenz von Mitteilungs-Indikatorkennungen aus K Koordinaten besteht.

10. Kommunikationssystem, das wenigstens eine Vorrichtung nach Anspruch 6, wenigstens eine Vorrichtung nach Anspruch 8 und ein Netzwerk umfasst, das die Vorrichtungen verbindet.

**Revendications**

1. Procédé pour une notification d'évènements dans un réseau de communication sans fil, comprenant les étapes de attribuer une séquence comportant K identifiants d'indicateurs de notifications à un identifiant de notification :

établir tous les indicateurs de notifications identifiés par les identifiants d'indicateurs de notifications appartenant à ladite séquence de sorte qu'ils soient positifs si une notification pour ledit identifiant de notification est présent (811); et
envoyer lesdits indicateurs de notifications à travers un canal de notification d'un réseau de communication sans fil (812),
dans lequel
des indicateurs de notifications consistent chacun en au moins un bit et sont transmis successivement sur un canal ayant une structure à trames;
ladite séquence comprend exactement un identifiant d'indicateur de notification par trame; et
ladite séquence est répétée avec une période de K trames,
**caractérisé en ce que**
lesdits identifiants de notifications sont agencés dans un espace à K dimensions, K étant supérieur à 1;
chaque identifiant de notification est associé à un ensemble de K coordonnées; et
ladite séquence d'identifiants d'indicateurs de notifications consiste en lesdites K coordonnées.

2. Procédé selon la revendication 1, dans lequel dans une trame, $N_{ni}$ indicateurs de notifications sont transmis et

lesdites K coordonnées $X_i$ attribuées audit identifiant de notification n satisfont une équation

$$n = \sum_{i=0}^{K-1} X_{i,n} N_{ni}^{i}$$

3. Procédé selon l'une des revendications précédentes, dans lequel un ordre de transmission desdits identifiants d'indicateurs de notifications dans ladite séquence est déterminé par une numérotation desdites trames.

4. Procédé selon la revendication 3, dans lequel une ième coordonnée est un identifiant de l'indicateur de notification attribué dans toutes les trames avec un numéro de trame M satisfaisant une équation

$$i = M \bmod K$$

5. Procédé selon l'une des revendications précédentes, comprenant en plus les étapes de
définir la longueur de séquence K avant ladite étape d'attribution d'une séquence de K identifiants d'indicateurs de notifications à un identifiant de notification (804); et
envoyer la valeur K à travers un réseau de communication (805).

6. Dispositif (900) d'un système de communication, comprenant un générateur de notifications (901) et une interface réseau (902),
**caractérisé en ce que**
ledit générateur de notifications et ladite interface réseau sont dotés d'un moyen configuré pour exécuter les étapes d'un procédé selon l'une des revendications précédentes.

7. Support lisible par ordinateur sur lequel sont stockées des instructions qui, lorsqu'elles sont exécutées sur un processeur d'un dispositif d'un système de communication, amènent le dispositif à exécuter les étapes de l'un des procédés selon les revendications 1 à 5.

8. Dispositif (1000) d'un système de communication sans fil, comprenant un détecteur de notifications (1002) et une interface réseau (1001), configurés pour recevoir et détecter des notifications à partir d'un canal de notification d'un système de communication sans fil,
ladite interface réseau et ledit détecteur de notification comprenant un moyen configuré pour recevoir et détecter des notifications consistant chacune en au moins un bit, qui sont transmises successivement sur un canal ayant une structure à trames, et qui sont identifiées par une séquence de K identifiants d'indicateurs de notifications attribués à un identifiant de notification,
ladite séquence comprenant exactement un identifiant d'indicateur de notification par trame et étant répétée avec une période de K trames, où
ledit moyen est en plus configuré pour estimer qu'une notification pour ledit identifiant de notification est présente, si tous indicateurs identifiés par ladite séquence d'identifiants d'indicateurs de notification sont établis de sorte à être positifs,
**caractérisé en ce que**
ledit moyen est en plus configuré pour identifier lesdits indicateurs, à recevoir, par une séquence d'identifiants d'indicateurs de notifications consistant en K coordonnées d'un espace à K dimensions, K étant supérieur à 1, où lesdits identifiants de notifications sont agencés, chaque identifiant de notification étant associé à un ensemble de K coordonnées.

9. Support lisible par ordinateur sur lequel sont stockées des instructions qui, lorsqu'elles sont exécutées sur un processeur d'un dispositif d'un système de communication, amènent le dispositif à recevoir et à détecter des notifications à partir d'un canal indicateur de recherche d'un réseau de communication sans fil,
lesdites notifications consistant en des indicateurs se composant chacun d'au moins un bit, qui sont transmises successivement sur un canal ayant une structure à trames, et qui sont identifiées par une séquence de K identifiants d'indicateurs de notifications, ladite séquence comprenant exactement un identifiant d'indicateur de notification par trame et étant répétée avec une période de K trames, où

il est estimé qu'une notification pour ledit identifiant de notification est présente, si tous les indicateurs identifiés par ladite séquence d'identifiants d'indicateurs de notifications sont établis de sorte à être positifs,
**caractérisé en ce que**
lesdites identifiants de notifications sont agencés dans un espace à K dimensions, K étant supérieur à 1;
chaque identifiant de notification est associé à un ensemble de K coordonnées, et
ladite séquence d'identifiants d'indicateurs de notifications consistent en lesdites K coordonnées.

10. Système de communication comprenant a moins un dispositif selon la revendication 6, au moins un dispositif selon la revendication 8, et un réseau connectant lesdits dispositifs.

Fig. 1

Fig. 2

Fig. 3

Fig. 4

Fig. 5

100 \PICH

300 \MICH

DRX cycle 113

102

UE Paging Occasion

SFN 103

SFN 103

503 504

$N_{ni}$ notification indicators

501

502

Read the notification indicator NI corresponding to the MBMS service identifer in frame 503

Read the notification indicator NI corresponding to the MBMS service identifer in frame 504

Read MCCH if both NIs activated

EP 1 608 195 B1

18

Fig. 6

Fig. 7

801
## Network controller

802
## Network

803
## UE

804
Define sequence
length K

805
send K →

806
Select notification
identifier for
a service

807
send notification identifier →

809
Calculate notification
indicator identifiers
as a sequence of
cartesian coordinates
representing the
notification identifier

808
Calculate notification
indicator identifiers
as a sequence of
cartesian coordinates
representing the
notification identifier

810
noti-
fication for
notification identi-
fier present
?

No

Yes

811
Set all notification
indicators identified
by the notification
indicator identifiers
belonging to the
sequence to positive

812
send notification indicators →

813
Check notification indicators
identified by the notification
indicator identifiers belonging
to the sequence

814
Detect whether
notification is
present or not

## Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HARRI HOLMA ; ANTTI TOSKALA.** WCDMA for UMTS, radio access for third generation mobile communications. John Wiley & Sons, Ltd,